# EUROPEAN PATENT SPECIFICATION

(11) **EP 0 963 718 B1**
(45) Date of publication and mention of the grant of the patent: **23.04.2003**
(21) Application number: 98943897.3
(22) Date of filing: 23.09.1998
(51) Int. Cl.: A47B 47/02, A47B 96/20, F16B 12/44

(54) **FURNITURE COMPOSITION**
MÖBELEINRICHTUNG
COMPOSITION MEUBLE

(30) Priority: 24.09.1997 ES 9702456
(43) Date of publication of application: 15.12.1999
(73) Proprietor: Morduran, S.L., 06010 Badajoz (ES)
(72) Inventor: MORALES JIMENEZ, Pedro, E-06010 Badajoz (ES); DURAN ROBLES, Fermin, E-06010 Badajoz (ES)
(74) Representative: Asensio Fernandez-Castanys, Trinidad
(86) International application number: ES9800261
(87) International publication number: WO99015050

(56) References cited:
- FR-A- 925 976
- FR-A- 1 414 890
- US-A- 3 777 437
- US-A- 5 382 088
- US-A- 5 451 102

## Description

### BACKGROUND OF THE INVENTION

The present invention refers to a modular item of furniture according to the preamble of the independent claim.

In a broad sense, the invention has developed a modular structure for shaping every kind of furniture, such as tables, seats, shelves, bookcases and similar, on the basis of a metallic sheet or plate, preferably made of aluminium, with a frame of same material, the panels of which have mutual junction means, allowing them to be perfectly fastened and positioned, in order to shape every kind of furniture.

The invention foresees the use of modules including panels constituted by a central sheet and tubular frames having a rectangular section and intermediate longitudinal partitions, the panels of which are joined and positioned ones with others through junction means constituted by intermediate T-shaped parts fastened among the panels, combined to indistinctly constitute or form any type of furniture.

### STATE OF THE ART

There are, at present, in the market, many types of some furniture shaped on the basis of metallic sheets presenting a drawback derived from the material constituting them since they have sharp edges which involve a serious risk for the user safety, as these edges are exposed to many cuts derived from the edges of the metallic sheets or plates.

The applicant has knowledge of the existence of US-A-3 777 437 , forming the basis for the preamble of the independent claim, in which a post is described and claimed for fastening a panel in the form of a sheet in the place, said post having a longitudinal internal channel from end to end, a longitudinal opening through one of the outer walls of said post in the aforementioned longitudinal channel and a longitudinal groove in the post which forms part of the longitudinal channel, the groove being located on an opposite side to the longitudinal opening of said channel and laterally displaced from the longitudinal opening.

The post acts in combination with a panel in the form of a sheet, the panel having a large surface area which finishes along the edge thereof in a first portion of the edge mainly at a right angle to the aforementioned surface area and a second portion of the edge mainly parallel to the large surface area, forming the outer edge of the second portion of the edge that externally has the shape of a sheet and is located within the longitudinal groove.

As a consequence, there is no identity between one invention and the other.

The applicant also has knowledge of the Patent of Invention FR 925 976 relating to a system for assembling metallic panels on wooden pieces of furniture.

From the US-A- 5 382 088, there is known the existence of a form of assembling cabins, which, using a plurality of previously conformed panels, incorporate mouldings with holes in the perimeter and in collaboration with conventional screws can allow rapid assembly of the body of a cabin with application in multiple operations.

From the US-A-451 102 there is known a form of assembly of a cabin with a neighbouring mechanism starting from a base in the form of a panel in which additional pieces are introduced to slowly raise the assembly, pieces which are completely mechanised achieving their introduction into grooves and maintaining the panels joined regardless of whether one is located in a horizontal position and the other in a vertical one.

From FR-A-1 414 890, an improved device is known for joining pieces to each other, consisting of a hollow profile provided on one of its major faces with a longitudinal groove having equidistant channels, introducing the pieces from one end inside the profile, which pieces are attached inside with emerging studs that are used to be introduced inside complementary pieces, thus various pieces are attached to each other with the collaboration of the device.

### SUMMARY OF THE INVENTION

The present invention is set out in the independent claim. A preferred embodiment is specified in the dependent claim.

All this will be explained with a greater detail along the following description.

### BRIEF DESCRIPTION OF THE DRAWINGS

The description of the object of the present invention will be done on the basis of the accompanying drawings, which by way of example with non-limiting sense, show in a preferred mode of embodiment the following:
Figure number 1.- Corresponds to a perspective view of a metallic sheet or plate for shaping the panels.
Figure number 2.- Represents a perspective view of a profile formed from one of the lengths configuring the panel frames.
Figure number 3.- Shows, lastly, a perspective view of two panels with their corresponding junction means.

### DETAILED DESCRIPTION OF THE PREFERRED EMBODIMENT OF THE INVENTION

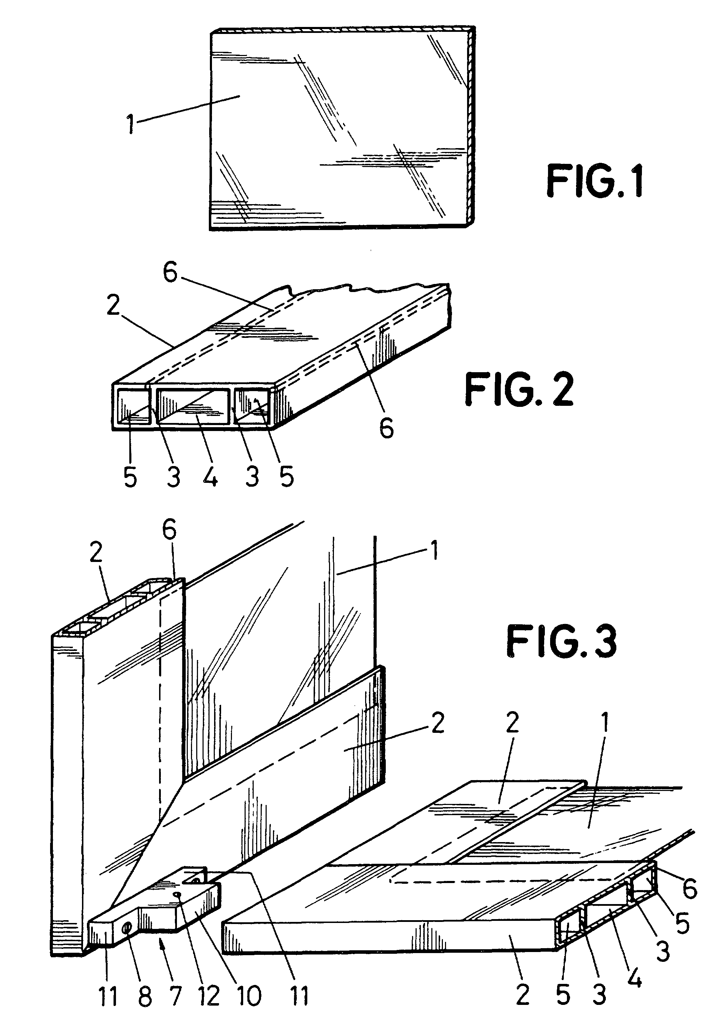

The following detailed description of the preferred embodiment of the invention will be taken as a basis of the accompanying drawing, therein the corresponding or similar elements are designed with the same numerical references along the different figures.

As can be seen according to the accompanying drawings, the device which is the object of the present invention includes the use of metallic sheets of plates (1), preferably made of aluminium, and lengths of tubular profiles (2) of same material.

Each length of tubular profile (2) presents a rectangular shape and has two longitudinal reinforcement partitions (3), forming a central duct (4) which is greater than the two lateral ducts (5), which are equal.

The tubular profiles (2) can have longitudinal grooves (6) in the junctions of their constitutive partitions, both inner (3) and outer.

The panels are shaped when inserting the metallic sheet or plate edges (1) into the longitudinal grooves (6) of the tubular profiles (2), which remain, in turn, joined at their ends by means of head- or mitre-junction, in order to shape the frame of the metallic sheet or plate.

The junction means between panels are constituted by means of plastic material parts (7) having a prismatic T-shaped structure.

Each T-shaped part is fastened by means of screws (8), and by the upper surface of its horizontal length (9), over the tubular mitre-jointed profiles (2) of the frame of one of the panels, while its vertical length (10) and wings (11) are inserted into the central (4) and lateral (5) ducts, of one of the tubular profile (2) head-jointed, and configuring the frame of the other panel.

The T-shaped parts have, a their vertical length (10) a perforation (12) to receive a pin passing through the head-jointed profile (2), the edges of which, seen from their partitions (3), will present recesses for introducing the wings (11) of the T-shaped parts (7), into the lateral ducts (5), and of their vertical length (10) into the central duct (4) of the head-jointed profiles (2).

On the basis of this structure of panels and junction means among them, a shape of every kind of furniture can be obtained, in which the metal material of the sheets or plates (1) has no sharp edges owing to the arrangement of the frames formed by the profiles (2).

## Claims

1. A modular item of furniture composed of a plurality of modules, each module comprising a panel (1) and a frame therefor constituted of hollow tubular profiles (2), each panel being in the form of a metallic sheet or plate (1), adjacent hollow tubular profiles (2) being joined one to the other by means of butt or mitre joints, **characterised in that** each hollow tubular profile (2) comprises two partition walls (3) spanning the space between the lateral walls of the profile (2), the cross-section of the profile (2) having, due to these partition walls (3), a central duct (4) and two lateral ducts (5) one on each side of said central duct (4), each hollow tubular profile (2) also comprising at least one cut-out portion (6) the at least one cut-out portion being located in a lateral wall in the region between a partition wall (3) and the end wall or in an end wall, cut-out portion(s) constituting groove(s) receiving the edges of one said panel, adjacent modules being interconnected by means of T-shaped junction means, the external portion of the horizontal part (II) of the "T" being adapted to be attached to the junction region of two adjacent profiles of a module, the opposed portion of the horizontal part on either side of the vertical leg as well as the vertical leg (10) being adapted for insertion to the lateral ducts (5) and the central duct (4), respectively, of the hollow tubular profile of an adjacent module.

2. A modular item of furniture according to claim 1, **characterised in that** each "T" shaped junction means (7) comprises a first through -hole (12) in its vertical leg part and two second through-holes (8) in the horizontal part, one on each side of the central leg part (10), the longitudinal axis of the first through-hole (12) being at right angles to the longitudinal axes of the second through holes (8,8).

## Patentansprüche

1. Ein aus einer Vielzahl von Einzelmodulen bestehendes, bausteinartiges Möbelstück, wobei jeder Module besteht aus einem Panel (1) und einem Rahmen, welcher wiederum aus röhrenförmigen Hohlprofilen (2) besteht. Die Panele haben die Form einer Metalltafel oder Platte (1). Die benachbarten röhrenförmigen Hohlprofile (2) sind untereinander durch ein planes oder rechtwinkliges Gelenk verbunden, **dadurch gekennzeichnet, dass** jedes röhrenförmige Hohlprofil (2) zwei Trennwände (3) besitzt, die den Raum zwischen den seitlichen Wänden des Profils (2) durchlaufen, wodurch der Querschnitt des Profils (2) eben durch diese Trennwände (3) eine zentrale Röhre (4) und zwei seitliche Röhren (5) erhält, je eine an jeder Seite der besagten zentralen Röhre (4). Außerdem weist jedes röhrenförmige Hohlprofil (2) mindestens ein ausgeschnittenes Teil (6) auf, welches sich am ausgeschnittenen Teil (mindestens einer) einer der Seitenwände im Bereich zwischen einer Teilwand (3) und der Außenwand oder an einer Außenwand befindet. Die ausgeschnittenen Teile (oder der Teil) bilden Rille, in der sie die Kanten eines der genannten Panele aufnehmen, wobei die angrenzenden Module mittels T - förmiger Verbindungsstücke miteinander verbunden sind. Hierbei wird der horizontale Teil (II) der "T" so angepasst, dass er mit den Verbindungsbereichen zweier angrenzender Profile eines Moduls verbunden werden kann. Der dem zu beiden Seiten des vertikalen Abschnitts gehörenden horizontalen Teil gegenüberliegende Teil und der vertikale Abschnitt (10) sind so angepasst, dass sie in die seitliche (5) bzw. in die zentrale Röhre (4) des röhrenförmigen Profils eines angrenzenden Moduls eingeführt werden können.

2. Ein bausteinartiges Möbelstück gemäß des Anspruchs 1, **dadurch gekennzeichnet, dass** jedes T-formiges Verbindungsstück (7) ein erstes durchgehendes Loch (12) im Teil seines vertikalen Abschnitts und zwei zweite durchgehende Löcher (8) im horizontalen Teil und eins auf jeder Seite des Teils des zentralen Abschnittes (10) aufweist, wobei die Längsachse des ersten durchgehenden Loches (12) im rechten Winkel zur Längsachse der zweiten durchgehenden Löcher (8, 8) steht.

## Revendications

1. Pièce modulaire de mobilier composée d'une pluralité de modules, chaque module comprenant un panneau (1) et un cadre pour celui-ci, constitué de profilés (2) tubulaires creux, chaque panneau ayant une forma de lame ou plaque (1) métallique, les profilés (2) tubulaires creux attenants étant unis entre eux au moyen d'un joint plat ou à angle droit, **caractérisée en ce que** chaque profilé (2) tubulaire creux comprend deux parois (3) de division qui traversent l'espace existant entre les parois latérales du profilé (2), en possédant la section transversale du profilé (2), à la suite de ces parois (3) de séparation, un conduit (4) central et deux conduits (5) latéraux, un de chaque côté du conduit (4) central, chaque profilé (2) tubulaire creux comprenant en plus au moins une partie (6) découpée, la au oins pièce unique étant découpée étant située sur une paroi latérale dans la zone existante entre une paroi (3) partielle et la paroi extrême ou sur une paroi extrême, la ou les parties découpées formant une ou de des rainures qui reçoivent les bords d'un dudit panneau, les modules attenants étant interconnectés au moyen d'un joint sous forme de T, la partie (II) horizontale du "T" étant adaptée pour s'unir à zone de joint de deux profilés attenants d'un module, la partie opposée de la partie horizontale de chaque côté du tronçon vertical, ainsi que le tronçon vertical (10), étant adapté pour l'insertion dans le conduit (5) latéraux et le conduit (4) central respectivement du profilé tubulaire creux d'un module attenant.

2. Pièce modulaire de mobilier selon la revendication 1, **caractérisée en ce que** chaque moyen (7) de joint sous forme de "T" comprend un premier orifice (12) traversant sur sa partie de tronçon vertical et deux seconds orifices (8) traversant sur la partie horizontale, un de chaque côté de la partie de tronçon (10) central, l'axe longitudinal du premier orifice (12) traversant formant des angles droits par rapport à l'axe longitudinal de seconds orifices (8, 8) traversants.
